# DEMANDE DE BREVET EUROPEEN

(11) **EP 3 626 450 A1**
(43) Date de publication de la demande: **25.03.2020**
(21) Numéro de dépôt: 19198791.6
(22) Date de dépôt: 20.09.2019
(51) Int. Cl.: B32B 37/00, B32B 38/10

(54) **PROCÉDÉ DE DÉCAPAGE D'UN SUBSTRAT PAR TRANSFERT D'UN FILM SUPERFICIEL DE POLYMÈRE THERMOPLASTIQUE**

(30) Priorité: 24.09.2018 FR 1858682
(71) Demandeur: Commissariat à l'énergie atomique et aux énergies alternatives, 75015 Paris (FR)
(72) Inventeur: MONTMEAT, Pierre, 38054 GRENOBLE CEDEX 09 (FR); FOURNEL, Frank, 38054 GRENOBLE CEDEX 09 (FR)
(74) Mandataire: Brevalex

(57) **Abrégé**

L'invention porte sur un procédé de décapage d'un premier substrat (1) pour en retirer un premier film superficiel (2) en un polymère thermoplastique, le premier film superficiel (2) présentant une première énergie d'adhérence avec le premier substrat (1) au niveau d'une première interface (3). Le procédé comprenant les étapes suivantes :
- mise en contact du premier substrat (1) avec un deuxième substrat (4) ayant un deuxième film superficiel (5) en un polymère thermoplastique, le deuxième film superficiel (5) présentant une deuxième énergie d'adhérence avec le deuxième substrat (4) qui est supérieure à la première énergie d'adhérence, la mise en contact étant réalisée par l'intermédiaire des premier et deuxième films superficiels,
- formation d'un assemblage au moyen d'un collage des premier et deuxième films superficiels (2, 5) réalisé de telle manière que les premier et deuxième films superficiels présentent une troisième énergie d'adhérence supérieure à la première énergie d'adhérence,
- séparation de l'assemblage au niveau de la première interface (3).

## Description

### DOMAINE TECHNIQUE

Le domaine de l'invention est celui de la microélectronique, et plus particulièrement celui du décapage d'un substrat pour en retirer un film superficiel.

### ÉTAT DE LA TECHNIQUE ANTÉRIEURE

En microélectronique, de nombreux procédés font temporairement appel à des couches superficielles qu'il convient de retirer d'un substrat lorsque le procédé est terminé. C'est le cas des films de polymère utilisés par exemple en photolithographie.

Généralement, le décapage du substrat est réalisé chimiquement par dissolution de la couche superficielle au moyen de solvants, de bases ou d'acides ou par gravure assistée d'un plasma.

Le décapage du substrat peut également être réalisé par pelage, celui-ci étant réalisé au moyen d'un autre film adhésif de polymère (par exemple le film commercialisé sous l'appellation 3M™ Wafer De-Taping Tape 3305) et pouvant mettre en œuvre des machines assez complexes d'étalement et de retrait.

### EXPOSÉ DE L'INVENTION

L'invention a pour objectif de proposer une méthode de décapage qui ne nécessite pas d'avoir recours à des solutions agressives ou toxiques tout en restant simple à mettre en œuvre.

L'invention concerne à cet effet un procédé de décapage d'un premier substrat pour en retirer un premier film superficiel en un polymère thermoplastique, le premier film superficiel présentant une première énergie d'adhérence avec le premier substrat au niveau d'une première interface. Ce procédé comprend la mise en contact du premier substrat avec un deuxième substrat ayant un deuxième film superficiel en un polymère thermoplastique, le deuxième film superficiel présentant une deuxième énergie d'adhérence avec le deuxième substrat, la deuxième énergie d'adhérence étant supérieure à la première énergie d'adhérence. Le procédé se poursuit avec la mise en contact du premier substrat et du deuxième substrat réalisée par l'intermédiaire des premier et deuxième films superficiels et avec la formation d'un assemblage au moyen d'un collage des premier et deuxième films superficiels réalisé de manière à ce que les premier et deuxième films superficiels présentent une troisième énergie d'adhérence supérieure à la première énergie d'adhérence. Le procédé se termine avec la séparation de l'assemblage au niveau de la première interface.

Certains aspects préférés mais non limitatifs de ce procédé sont les suivants :
- le collage des premier et deuxième films superficiels est réalisé à une température supérieure à la température de transition vitreuse du polymère thermoplastique de chacun des premier et deuxième films superficiels ;
- la nature chimique du polymère thermoplastique du deuxième film superficiel est identique à la nature chimique du polymère thermoplastique du premier film superficiel ;
- il comprend en outre une première étape préalable de recuit du premier substrat revêtu du premier film superficiel à une première température et une deuxième étape préalable de recuit du deuxième substrat revêtu du deuxième film superficiel à une deuxième température supérieure à la première température ;
- il comprend en outre une première étape préalable de revêtement du premier substrat par le premier film superficiel au niveau de la première interface et une deuxième étape préalable de revêtement du deuxième substrat par le deuxième film superficiel au niveau d'une deuxième interface, le premier substrat présentant avant revêtement une première rugosité de surface du côté de la première interface, le deuxième substrat présentant avant revêtement une deuxième rugosité de surface du côté de la deuxième interface, la deuxième rugosité de surface étant supérieure à la première rugosité de surface ;
- le deuxième film superficiel repose sur une couche adhésive portée par le deuxième substrat ;
- le premier film superficiel repose sur une couche antiadhésive portée par le premier substrat ;
- la deuxième énergie d'adhérence est au moins deux fois, de préférence au moins cinq fois, supérieure à la première énergie d'adhérence ;
- la séparation de l'assemblage est réalisée à température ambiante.

### BRÈVE DESCRIPTION DES DESSINS

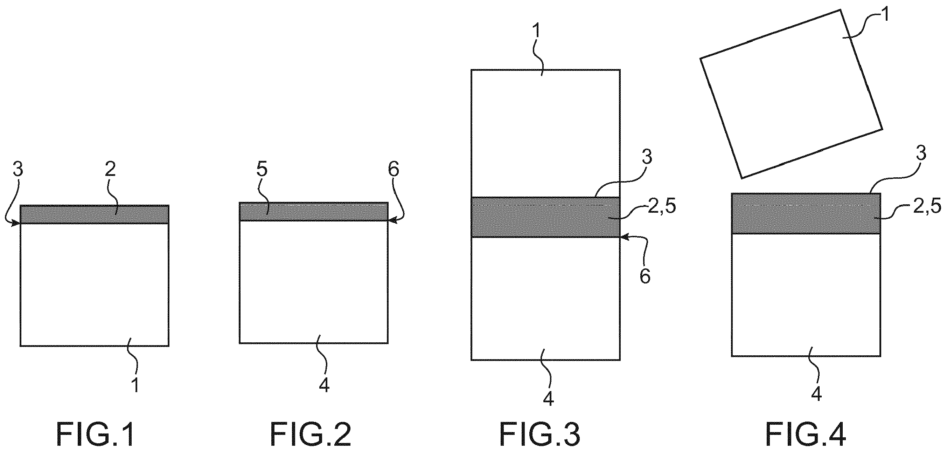

D'autres aspects, buts, avantages et caractéristiques de l'invention apparaîtront mieux à la lecture de la description détaillée suivante de formes de réalisation préférées de celle-ci, donnée à titre d'exemple non limitatif, et faite en référence aux dessins annexés sur lesquels les figures 1 à 4 représentent des étapes successives d'un procédé de décapage selon un mode de réalisation possible de l'invention.

### EXPOSÉ DÉTAILLÉ DE MODES DE RÉALISATION PARTICULIERS

En référence à la figure 1, l'invention vise un procédé de décapage d'un premier substrat 1 pour en retirer un premier film superficiel 2 en un polymère thermoplastique. Le premier film superficiel 2 présente une première énergie d'adhérence E1 avec le premier substrat 1 au niveau d'une première interface 3. Dans le cadre du présent exposé une énergie d'adhérence peut par exemple être mesurée selon la méthode du double levier à déplacement imposé introduite dans l'article de W. P. Maszara et al. "Bonding of silicon wafers for silicon-on-insulator," Journal of Applied Physics, vol. 64, no. 10, pp. 4943-4950, Nov. 1988. C'est le cas notamment dans les exemples de réalisation présentés plus loin.

En référence à la figure 2, le procédé comprend la mise à disposition d'un deuxième substrat 4, lequel deuxième substrat 4 dispose également d'un deuxième film superficiel 5 en un polymère thermoplastique. Le deuxième film superficiel 5 présente une deuxième énergie d'adhérence E2 avec le deuxième substrat 4 au niveau d'une deuxième interface 6, la deuxième énergie d'adhérence E2 étant supérieure à la première énergie d'adhérence E1. La deuxième énergie d'adhérence E2 est de préférence au moins deux fois, encore plus de préférence au moins cinq fois, supérieure à la première énergie d'adhérence E1.

En référence à la figure 3, le procédé comprend la mise en contact du premier substrat et du deuxième substrat par l'intermédiaire des premier et deuxième films superficiels, puis la formation d'un assemblage au moyen d'un collage des premier et deuxième films superficiels 2, 5. Ce collage est plus particulièrement réalisé de manière à ce que les premier et deuxième films superficiels présentent ente eux une troisième énergie d'adhérence E3 supérieure à la première énergie d'adhérence E1. La troisième énergie d'adhérence E3 est de préférence au moins deux fois, encore plus de préférence au moins cinq fois, supérieure à la première énergie d'adhérence E1.

Puis en référence à la figure 4, le procédé comprend la séparation de l'assemblage au niveau de l'interface où l'énergie d'adhérence est la plus faible, en l'occurrence la première interface 3. Cette séparation peut être réalisée à température ambiante. Il peut s'agir d'une séparation mécanique par traction réalisée à température ambiante. Une telle séparation mécanique peut être obtenue en venant insérer une lame qui va provoquer un décollement. Une telle séparation mécanique peut également être réalisée à l'aide d'un anneau de décollement prenant le chanfrein d'un des substrats et d'un support venant maintenir l'autre substrat par aspiration. Le soulèvement de l'anneau vient alors induire un décollement au niveau de l'interface la plus faible.

Dans un mode de réalisation de l'invention, le collage des premier et deuxième films superficiels 2, 5 est réalisé à une température supérieure à la température de transition vitreuse du polymère thermoplastique de chacun des premier et deuxième films superficiels. Ce collage est de préférence réalisé sous vide.

Dans un mode de réalisation privilégié, la nature chimique du polymère thermoplastique du deuxième film superficiel est identique à celle du polymère thermoplastique du premier film superficiel. On obtient ainsi suite au collage une phase homogène et unique du polymère thermoplastique, et la forte affinité entre les deux surfaces mises en contact associée à la faible viscosité du polymère conduit à une très forte adhérence.

Il est possible de jouer sur la température afin d'obtenir une deuxième énergie d'adhérence supérieure à la première énergie d'adhérence. Dans le cadre du mode de réalisation privilégié exposé ci-dessus, le procédé peut ainsi comprendre une première étape préalable de recuit du premier substrat revêtu du premier film superficiel à une première température et une deuxième étape préalable de recuit du deuxième substrat revêtu du deuxième film superficiel à une deuxième température supérieure à la première température.

En complément ou non à ce contrôle thermique des énergies d'adhérence, il est possible de jouer sur la rugosité de surface des premier et deuxième substrats afin d'obtenir une deuxième énergie d'adhérence supérieure à la première énergie d'adhérence. Dans le cadre du mode de réalisation privilégié exposé ci-dessus, le procédé peut ainsi comprendre une première étape préalable de revêtement du premier substrat par le premier film superficiel 2 au niveau de la première interface 3 et une deuxième étape préalable de revêtement du deuxième substrat par le deuxième film superficiel 5 au niveau de la deuxième interface 6, le premier substrat présentant avant revêtement une première rugosité de surface du côté de la première interface, le deuxième substrat présentant avant revêtement une deuxième rugosité de surface du côté de la deuxième interface, la deuxième rugosité de surface étant supérieure à la première rugosité de surface. Le deuxième substrat peut par exemple être soumis à une opération préalable venant en augmenter la rugosité de surface, telle qu'une opération d'abrasion par exemple au moyen d'une roue diamantée.

En complément ou non à l'une et/ou l'autre de ces techniques de contrôle des énergies d'adhérence le deuxième film superficiel 5 peut reposer sur une couche adhésive, par exemple une couche en HMDS (Bis(triméthylsilyl)amine), portée par le deuxième substrat 4 et/ou le premier film 2 superficiel peut reposer sur une couche antiadhésive, par exemple une couche en OPTOOL™, portée par le premier substrat 4.

L'invention propose ainsi un procédé de décapage du premier substrat peu complexe au moyen d'un simple transfert de la première couche superficielle du premier substrat vers le deuxième substrat, et qui n'exploite aucune solution agressive ou toxique.

Dans chacun des exemples de réalisation de l'invention présentés ci-dessous, le polymère thermoplastique des premier et deuxième films superficiels est le polymère commercialisé par la société Brewer Science sous le nom commercial BrewerBOND®305.

Dans un premier exemple de réalisation, on étale au moyen d'une enduction par centrifugation 40 µm de ce polymère sur une première plaque de silicium de 200 mm de diamètre. Un recuit à 170°C est réalisé. L'énergie d'adhérence est d'environ 2 J/m². Puis on étale au moyen d'une enduction par centrifugation 40 µm de ce même polymère sur une deuxième plaque de silicium de 200 mm de diamètre. Un recuit à 250°C est réalisé. L'énergie d'adhérence est d'environ 14 J/m². On colle sous vide les deux plaques via l'interface polymère, à 200°C. La température de transition de ce polymère est proche de 100 °C. On sépare l'assemblage issu de ce collage à température ambiante et on récupère 80 µm de polymère sur la deuxième plaque de silicium. La première plaque de silicium ne présente plus de polymère, elle a été décapée.

Dans un second exemple de réalisation, on étale au moyen d'une enduction par centrifugation 40 µm de ce polymère sur une première plaque de silicium de 200 mm de diamètre qui présente une rugosité RMS inférieure à 1 nm. Un recuit à 200°C est réalisé et l'énergie d'adhérence est d'environ 9 J/m². Puis on étale au moyen d'une enduction par centrifugation 40 µm de ce même polymère sur une deuxième plaque de silicium de 200 mm de diamètre qui présente une rugosité RMS de 300 nm à l'issue d'une abrasion au moyen d'une roue diamantée. Un recuit à 200°C est réalisé et l'énergie d'adhérence est supérieure à 100 J/m². On colle sous vide les deux plaques via l'interface polymère, à 200°C. La température de transition de ce polymère est proche de 100 °C. On sépare l'assemblage issu de ce collage à température ambiante et on récupère 80 µm de polymère sur la deuxième plaque de silicium. La première plaque de silicium ne présente plus de polymère, elle a été décapée.

## Revendications

1. Procédé de décapage d'un premier substrat (1) pour en retirer un premier film superficiel (2) en un polymère thermoplastique, le premier film superficiel (2) présentant une première énergie d'adhérence avec le premier substrat (1) au niveau d'une première interface (3), le procédé comprenant les étapes suivantes :
- mise en contact du premier substrat (1) avec un deuxième substrat (4) ayant un deuxième film superficiel (5) en un polymère thermoplastique, le deuxième film superficiel (5) présentant une deuxième énergie d'adhérence avec le deuxième substrat (4), la deuxième énergie d'adhérence étant supérieure à la première énergie d'adhérence, la mise en contact du premier substrat et du deuxième substrat étant réalisée par l'intermédiaire des premier et deuxième films superficiels,
- formation d'un assemblage au moyen d'un collage des premier et deuxième films superficiels (2, 5) réalisé de manière à ce que les premier et deuxième films superficiels présentent une troisième énergie d'adhérence supérieure à la première énergie d'adhérence,
- séparation de l'assemblage au niveau de la première interface (3).

2. Procédé selon la revendication 1, dans lequel le collage des premier et deuxième films superficiels (2, 5) est réalisé à une température supérieure à la température de transition vitreuse du polymère thermoplastique de chacun des premier et deuxième films superficiels.

3. Procédé selon l'une des revendications 1 et 2, dans lequel la nature chimique du polymère thermoplastique du deuxième film superficiel est identique à la nature chimique du polymère thermoplastique du premier film superficiel.

4. Procédé selon la revendication 3, comprenant en outre une première étape préalable de recuit du premier substrat revêtu du premier film superficiel à une première température et une deuxième étape préalable de recuit du deuxième substrat revêtu du deuxième film superficiel à une deuxième température supérieure à la première température.

5. Procédé selon l'une des revendications 3 et 4, comprenant en outre une première étape préalable de revêtement du premier substrat par le premier film superficiel (2) au niveau de la première interface (3) et une deuxième étape préalable de revêtement du deuxième substrat par le deuxième film superficiel (5) au niveau d'une deuxième interface (6), le premier substrat présentant avant revêtement une première rugosité de surface du côté de la première interface, le deuxième substrat présentant avant revêtement une deuxième rugosité de surface du côté de la deuxième interface, la deuxième rugosité de surface étant supérieure à la première rugosité de surface.

6. Procédé selon l'une des revendications 1 à 5, dans lequel le deuxième film superficiel (5) repose sur une couche adhésive portée par le deuxième substrat (4).

7. Procédé selon l'une des revendications 1 à 6, dans lequel le premier film (2) superficiel repose sur une couche antiadhésive portée par le premier substrat (4).

8. Procédé selon l'une des revendications 1 à 7, dans lequel la deuxième énergie d'adhérence est au moins deux fois, de préférence au moins cinq fois, supérieure à la première énergie d'adhérence.

9. Procédé selon l'une des revendications 1 à 8, dans lequel la séparation de l'assemblage est réalisée à température ambiante.
